# EUROPEAN PATENT APPLICATION

(11) **EP 4 825 806 A1**
(43) Date of publication of application: **21.10.2026**
(21) Application number: 26171325.9
(22) Date of filing: 08.04.2026
(51) Int. Cl.: C01D 15/02, H01M 4/04, H01M 4/131, H01M 4/1315, H01M 4/1391, H01M 4/13915, H01M 4/36, H01M 4/485, H01M 4/525, C01G 51/00, C01G 51/42

(54) **POSITIVE ELECTRODES, RECHARGEABLE LITHIUM BATTERIES INCLUDING POSITIVE ELECTRODES, AND METHODS OF MANUFACTURING POSITIVE ELECTRODES**

(30) Priority: 14.04.2025 KR 20250048278
(71) Applicant: SAMSUNG SDI CO., LTD., Yongin-si, Gyeonggi-do 17084 (KR)
(72) Inventor: KIM, Young-Ki, 17084 Yongin-si (KR); CHUNG, Hyunjei, 17084 Yongin-si (KR); CHO, Yongmok, 17084 Yongin-si (KR); CHOI, Minjae, 17084 Yongin-si (KR); LEE, Soonrewl, 17084 Yongin-si (KR)
(74) Representative: Maiwald GmbH

(57) **Abstract**

A positive electrode according to some embodiments of the present disclosure may include a current collector and a positive electrode active material layer on the current collector. The positive electrode active material layer may include a positive electrode active material. The positive electrode active material may include a first positive electrode active material including a first lithium cobalt-based composite oxide having an aluminum amount greater than or equal to about 0.4 wt% based on 100 wt% of a total metal in the first lithium cobalt-based composite oxide, excluding lithium, and may include a second positive electrode active material including a second lithium cobalt-based composite oxide having an aluminum amount of greater than or equal to about 0.5 wt% based on 100 wt% of a total metal in the second lithium cobalt-based composite oxide excluding lithium.

## Description

### BACKGROUND

### 1. Field

The present disclosure relates to positive electrodes, rechargeable lithium batteries including the positive electrodes, and methods of manufacturing the positive electrodes.

### 2. Description of the Related Art

A portable information device (such as a cell phone, a laptop, smart phone) or an electric vehicle has used a rechargeable lithium battery having high energy density and easy portability as a driving power source. Recently, research has been actively conducted to use a rechargeable lithium battery with high energy density as a driving power source or power storage source for hybrid or electric vehicles.

Various positive electrode active materials have been investigated for the above-described aims. Among them, lithium nickel-based oxide, lithium nickel manganese cobalt composite oxide, lithium nickel cobalt aluminum composite oxide, and lithium cobalt-based oxide are mainly used as positive electrode active materials. With a recent rapidly increasing demand for large-sized, high-capacity, or high-energy-density rechargeable lithium batteries, there is a need to develop positive electrode active materials and positive electrodes including the positive electrode active materials that simultaneously improve stability and improve performance of a rechargeable lithium battery.

### SUMMARY

The present disclosure provides positive electrodes that can achieve high density, high capacity, long cycle-life characteristics, and high energy density for a rechargeable lithium battery, and the present disclosure provides rechargeable lithium batteries using the aforementioned positive electrodes.

A positive electrode according to some embodiments of the present disclosure may include a current collector and a positive electrode active material layer on the current collector. The positive electrode active material layer may include a positive electrode active material. The positive electrode active material may include a first positive electrode active material including a first lithium cobalt-based composite oxide having an aluminum amount greater than or equal to about 0.4 wt% based on 100 wt% of a total metal in the first lithium cobalt-based composite oxide, excluding lithium, and may include a second positive electrode active material including a second lithium cobalt-based composite oxide having an aluminum amount of greater than or equal to about 0.5 wt% based on 100 wt% of a total metal in the second lithium cobalt-based composite oxide, excluding lithium. An average particle diameter D₅₀ of the first positive electrode active material may be larger than an average particle diameter D₅₀ of the second positive electrode active material. Based on a total of 100 wt% of the first positive electrode active material and the second positive electrode active material, the positive electrode active material may include the first positive electrode active material in an amount from about 70 wt% to about 90 wt% and the second positive electrode active material in an amount from about 10 wt% to about 30 wt%. A ratio of a peak intensity of a (006) plane of the positive electrode to a peak intensity of a (101) plane of the positive electrode, when measuring an X-ray diffraction pattern of the positive electrode, may be greater than or equal to about 4.0.

In some embodiments, the first lithium cobalt-based composite oxide may be represented by:

Liₐ₁Coₓ₁Mg_{y1}Al_{z1}M¹_{w1}O_{2-b1}X_{b1}

0.8≤a1≤1.5, 0.9≤x1≤0.99, 0≤y1≤0.05, 0.01≤z1≤0.04, 0≤w1≤0.01, 0.9≤x1+y1+z1+w1≤1.1, and 0≤b1≤0.1. M¹ may be one or more elements of B, Ba, Ca, Ce, Cr, Cu, Fe, Mn, Mo, Nb, Si, Sn, Sr, Ti, V, W, Y, Zn, and Zr. X may be one or more elements of F, P, and S.

In some embodiments, an aluminum amount in the first lithium cobalt-based composite oxide may be from about 0.4 wt% to about 2.0 wt% based on 100 wt% of a total metal in the first lithium cobalt-based composite oxide, excluding lithium .

In some embodiments, an average particle diameter D₅₀ of the first positive electrode active material may be from about 9 µm to about 30 µm.

In some embodiments, the second lithium cobalt-based composite oxide may be represented by:

Liₐ₂Coₓ₂Mg_{y2}Al_{z2}M²_{w2}O_{2-b2}X_{b2}

0.8≤a2≤1.5, 0.9≤x2≤0.99, 0≤y2≤0.05, 0.01≤z2≤0.04, 0≤w2≤0.01, 0.9≤x2+y2+z2+w2≤1.1 and 0≤b2≤0.1. M² may be one or more elements of B, Ba, Ca, Ce, Cr, Cu, Fe, Mn, Mo, Nb, Si, Sn, Sr, Ti, V, W, Y, Zn, and Zr. X may be one or more elements of F, P, and S.

In some embodiments, an aluminum amount in the second lithium cobalt-based composite oxide may be from about 0.5 wt% to about 2.0 wt% based on 100 wt% of a total metal in the second lithium cobalt-based composite oxide, excluding lithium.

In some embodiments, an average particle diameter D₅₀ of the second positive electrode active material may be from about 1 µm to about 9 µm.

In some embodiments, the ratio of the peak intensity of the 006-plane to the peak intensity of the 101-plane may be from about 4.0 to about 6.0 when measuring the X-ray diffraction pattern of the positive electrode.

In some embodiments, a loading level of the positive electrode active material layer may be from about 10 mg/cm² to about 40 mg/cm².

In some embodiments, a density of the positive electrode active material layer may be from about 4.2 g/cc to about 4.5 g/cc.

In some embodiments, the positive electrode active material layer may further include aluminum hydroxide, aluminum oxide, or a combination thereof.

A method of manufacturing a positive electrode may include ( i ) preparing a first positive electrode active material including a first lithium cobalt-based oxide having an aluminum amount greater than or equal to about 0.4 wt% based on 100 wt% of a total metal in the first lithium cobalt-based oxide, excluding lithium; ( ii ) preparing a second positive electrode active material including a second lithium cobalt-based oxide having an aluminum amount of greater than or equal to about 0.5 wt% based on 100 wt% of a total metal in the second lithium cobalt-based oxide, excluding lithium, and having an average particle diameter D₅₀ that may be smaller than an average particle diameter D₅₀ of the first positive electrode active material; (iii) mixing from about 70 wt% to about 90 wt% of the first positive electrode active material, from about 10 wt% to about 30 wt% of the second positive electrode active material, and Al(OH)₃ based on a total of 100 wt% of the first positive electrode active material and the second positive electrode active material to prepare a positive electrode composition; (iv) coating and drying the positive electrode composition on a current collector to manufacture the intermediate positive electrode; and ( v ) subjecting the intermediate positive electrode to a compression.

In some embodiments, the method may further include subjecting the positive electrode to another compression after the compression of step (v).

In some embodiments, during step (iii), Al(OH)₃ may be mixed in an amount from about 0.01 wt% to about 0.1 wt% based on a total of 100 wt% of the first positive electrode active material and the second positive electrode active material.

In some embodiments, a ratio of a peak intensity of a (006) plane to a peak intensity of a (101) plane to be from about 4.0 to about 6.0 when measuring an X-ray diffraction pattern of the compressed positive electrode.

In some embodiments, in the compressed positive electrode, a density of the positive electrode active material layer may be from about 4.2 g/cc to about 4.5 g/cc.

A rechargeable lithium battery may include the positive electrode as described above, a negative electrode, and an electrolyte.

The positive electrode according to some embodiments exhibits maximized capacity, ensures long cycle-life characteristics, improves characteristics at high voltage, and improves high-temperature storage characteristics for the rechargeable lithium battery. Further, a rechargeable lithium battery using the positive electrode may exhibit high initial charge/discharge capacity and efficiency, may have high energy density and may exhibit long cycle-life characteristics.

### BRIEF DESCRIPTION OF THE DRAWINGS

FIG.1 is a view of a cylindrical rechargeable lithium battery.
FIG. 2 is a cross-sectional view of a prismatic rechargeable lithium battery.
FIGS. 3 and 4 are schematic exploded perspective views of a pouch-type rechargeable lithium battery.

### DETAILED DESCRIPTION

Hereinafter, some embodiments will be described in detail so that those of ordinary skill in the art can easily implement those embodiments. However, this disclosure may be embodied in many different forms and should not be construed as limited to the embodiments set forth herein.

The terminology used herein is used to describe embodiments and is not intended to limit the present disclosure. The singular expression includes the plural expression unless the context clearly dictates otherwise.

As used herein, "combination thereof" means a mixture, a laminate, a composite, a copolymer, an alloy, a blend, a reaction product, and the like of the constituents.

Herein, it should be understood that terms such as "comprises," "includes," or "have" are intended to designate the presence of an embodied feature, number, step, element, or a combination thereof, but these terms do not preclude the possibility of the presence or addition of one or more other features, number, step, element, or a combination thereof.

In the drawings, the thickness of layers, films, panels, regions, etc., may be exaggerated for clarity and like reference numerals designate like elements throughout the specification. It will be understood that when an element such as a layer, film, region, or substrate is referred to as being "on" another element, the element can be directly on the other element or intervening elements may also be present. In contrast, when an element is referred to as being "directly on" another element, there are no intervening elements present.

In addition, "layer" herein includes not only a shape formed on the whole surface when viewed from a plan view, but also a shape formed on a partial surface.

The average particle diameter may be measured by a method well known to those skilled in the art, for example, by a particle size analyzer or by a transmission electron microscope image or a scanning electron microscope image. Alternatively, it is possible to obtain an average particle diameter value by measuring using a dynamic light scattering method, performing data analysis, counting the number of particles for each particle size range, and calculating from this. As used herein, when a definition is not otherwise provided, the average particle diameter may mean the diameter D₅₀ of particles having a cumulative volume of 50 volume% in the particle size distribution. As used herein, when a definition is not otherwise provided, the average particle diameter means a diameter D₅₀ of particles having a cumulative volume of 50 volume% in the particle size distribution that is obtained by measuring the size (diameter or major axis length) of 20 particles at random in a scanning electron microscope image. The volume of a particle is calculated using the value read from the scanning electron microscope image on basis of the assumption that the particles have a spherical shape.

"Or" is not to be construed as an exclusive meaning, for example, "A or B" is construed to include A, B, or A+B.

"Metal" includes metals, transition metals and metalloids (semi-metals). Within the framework of the present application, the term 'metalloid (semi metal)' means a chemical element selected from the group consisting of B, Si, As, Te, and At. The heavier homologues of each of these metalloids (semi metals) hence represent metals. Likewise, the elements of groups 3-12 of the periodic table represent metals and the elements groups 1 and 2 excluding H (but including Be) are regarded as representing metals.

### Positive Electrode

**In** some embodiments, a positive electrode includes a current collector and a positive electrode active material layer on the current collector. The positive electrode active material layer includes a positive electrode active material. The positive electrode active material includes a first positive electrode active material including a first lithium cobalt-based composite oxide in which an aluminum amount is greater than or equal to about 0.4 wt% based on 100 wt% of a total metal, excluding lithium. The positive electrode active material includes a second positive electrode active material including a second lithium cobalt-based composite oxide having an aluminum amount of greater than or equal to about 0.5 wt% based on 100 wt% of a total metal, excluding lithium. An average particle diameter D₅₀ of the first positive electrode active material is larger than an average particle diameter D₅₀ of the second positive electrode active material. Based on a total of 100 wt% of the first positive electrode active material and the second positive electrode active material, the first positive electrode active material is included in an amount from about 70 wt% to about 90 wt%, and the second positive electrode active material is included in an amount from about 10 wt% to about 30 wt%, and a ratio of a peak intensity of a (006) plane to a peak intensity of a (101) plane when measuring the X-ray diffraction pattern of the positive electrode, is greater than or equal to about 4.0.

By using a positive electrode active material including lithium cobalt-based composite oxides having different average particle diameters D₅₀ while using a positive electrode active material including a lithium cobalt-based composite oxide, and by finely controlling amounts of each of the lithium cobalt-based composite oxides having different average particle diameters D₅₀ and an amount of doping element, structural stability is secured, and at the same time, a high-density positive electrode is manufactured through multi-stage compressing, thereby successfully improving both capacity and cycle-life characteristics of a rechargeable lithium battery, and a positive electrode including the positive electrode active material is provided.

### Positive Electrode Active Material

To prevent shrinkage and expansion within a positive electrode active material due to charge and discharge but stabilize a structure that may collapse due to rearrangement of the layered structure, heterogeneous elements are doped to prepare a positive electrode active material with excellent stability at a high voltage. In particular, Al³⁺ and/or Mg²⁺ may be doped to enhance structural stability of a lithium cobalt-based oxide used as the positive electrode active material. Al³⁺, which has a similar ion size (Al³⁺: 0.535 Å, Co³⁺: 0.545 Å) to Co³⁺ but the same oxidation number, may be convenient to use as a doping material. In addition, aluminum, which has stronger Al-O binding energy (about 511±3 kJ/mol) than Co-O binding energy (about 384.5±13.4 kJ/mol), may play a role of stabilizing the structure of the positive electrode active material during the shrinkage and expansion of the positive electrode active material due to the charge and discharge, while not participating in an electrochemical reaction, and, thus, aluminum have an advantage of being used as a doping material due to the characteristics of suppressing structural changes of the positive electrode active material due to movement of lithium ions. In addition, Mg²⁺ is substituted into lithium sites during the doping and may play a role of preventing a rearrangement of an oxygen layer during the charge and discharge in a lithium layer, and, accordingly, Mg²⁺ may have an advantage of increasing the structural stability.

Some embodiments provide a positive electrode active material securing the structural stability at a high voltage by mixing two types of lithium cobalt-based positive electrode active materials having different average particle diameters D₅₀ but which finely adjust an aluminum amount doped on each of the large and small particles, improving dispersibility of the positive electrode active materials when dry-mixing the positive electrode active materials, controlling compression conditions during positive electrode manufacturing, and, simultaneously, exhibiting improved capacity, charge/discharge efficiency, and high-temperature cycle-life characteristics at high voltage for the rechargeable lithium battery.

### First Positive Electrode Active Material

The first positive electrode active material includes a first lithium cobalt-based composite oxide and may include, for example, a first lithium cobalt-based oxide doped with aluminum and optionally magnesium, and the first lithium cobalt-based oxide may be represented by Chemical Formula 1.

[Chemical Formula 1] Liₐ₁Coₓ₁Mg_{y1}Al_{z1}M¹_{w1}O_{2-b1}X_{b1}.

In Chemical Formula 1, 0.8≤a1≤1.5, 0.9≤x1≤0.99, 0≤y1≤0.05, 0.01≤z1≤0.04, 0≤w1≤0.01, 0.9≤x1+y1+z1+w1≤1.1, and 0≤b1≤0.1. Further, M¹ is one or more of B, Ba, Ca, Ce, Cr, Cu, Fe, Mn, Mo, Nb, Si, Sn, Sr, Ti, V, W, Y, Zn, and Zr, X is one or more of F, P, and S.

In further embodiments of Chemical Formula 1, 0.92≤x1≤0.98, 0.01≤y1≤0.04, 0.01≤z1≤0.03, and 0≤w1≤0.01, or 0.94≤x1≤0.98, 0.01≤y1≤0.03, 0.01≤z1≤0.02, and 0≤w1≤0.01. In addition, 0.8≤a1≤1.2, 0.9≤a1≤1.2, or 0.98≤a1≤1.1.

The first positive electrode active material including the first lithium cobalt-based oxide may be large particles. The average particle diameter D₅₀ of the first positive electrode active material may be about 9 µm to about 30 µm, for example, from about 9 µm to about 25 µm, from about 10 µm to about 25 µm, or from about 12 µm to about 20 µm. The average particle diameter D₅₀ of the first positive electrode active material is larger than the average particle diameter D₅₀ of the second positive electrode active material. According to some embodiments, the positive electrode active material is a mixed form of a first positive electrode active material as large particles and a second positive electrode active material as small particles. Thus, the positive electrode active material layer density (mixture density) may be improved and high capacity and high energy density may be realized. The average particle diameter D₅₀ of the first positive electrode active material may be obtained by measuring the size (diameter or length of the longest axis) of about 20 random particles in a scanning electron microscope image to obtain a particle size distribution and by taking the diameter of particles having a cumulative volume of 50 vol% in the particle size distribution as the average particle diameter.

In the first lithium cobalt-based composite oxide, an aluminum amount (i.e., doping amount) based on 100 wt% of a total metal, excluding lithium, may be greater than or equal to about 0.4 wt% (greater than or equal to about 4000 ppm), for example, greater than or equal to about 0.45 wt%, greater than or equal to about 0.5 wt%, greater than or equal to about 0.55 wt%, greater than or equal to about 0.6 wt%, or greater than or equal to about 0.65 wt%, and less than or equal to about 2.0 wt%, less than or equal to about 1.8 wt%, less than or equal to about 1.6 wt%, less than or equal to about 1.4 wt%, less than or equal to about 1.2 wt%, less than or equal to about 1.0 wt%, less than or equal to about 0.8 wt%, or less than or equal to about 0.75 wt%. When the doping amount of aluminum in the first lithium cobalt-based oxide satisfies the above ranges, the positive electrode active material including the first lithium cobalt-based oxide is structurally stable at high voltage, and the capacity, resistance, and high-temperature cycle-life characteristics of the rechargeable lithium battery may all be improved.

The first lithium cobalt-based oxide may further include magnesium. In the first lithium cobalt-based composite oxide, a magnesium amount based on 100 wt% of a total metal excluding lithium may be less than or equal to about 2.0 wt%, for example, less than or equal to about 1.0 wt%, less than or equal to about 0.5 wt%, less than or equal to about 0.15 wt%, less than or equal to about 0.14 wt%, or less than or equal to about 0.13 wt% and may be greater than or equal to about 0.01 wt%, for example, greater than or equal to about 0.02 wt%, greater than or equal to about 0.03 wt%, greater than or equal to about 0.04 wt%, or greater than or equal to about 0.05 wt%. When the doping amount of magnesium in the first lithium cobalt-based oxide satisfies the above ranges, the positive electrode active material including it is structurally stable at high voltage and may have improved capacity, resistance, and cycle-life characteristics.

In some embodiments, the first positive electrode active material may be included in an amount from about 70 wt% to about 90 wt%, for example, from about 75 wt% to about 85 wt%, based on 100 wt% of the total of the first positive electrode active material and the second positive electrode active material. When the amount of the first positive electrode active material is as described above, the positive electrode active material including the first positive electrode active material may have high capacity, improve mixture density, and may exhibit high energy density.

In some embodiments, the first positive electrode active material may include a coating layer on the surface of the particles, the coating layer containing aluminum, titanium, or a combination thereof, and the coating layer on the surface of the first positive electrode active material particle may be in a form of a shell that continuously surrounds the particle surface of the first positive electrode active material, for example, may be in a form of a shell that surrounds the entire surface of the first positive electrode active material particle. According to some embodiments, the coating layer may be formed in a form that continuously covers the surface of the first positive electrode active material particle while being formed with a very thin and uniform thickness, whereby the positive electrode active material has improved structural stability without increasing resistance or decreasing capacity, effectively suppressing side reactions with the electrolyte, reducing gas generation under high voltage and high temperature conditions, and implementing long cycle-life characteristics for the rechargeable lithium battery.

In some embodiments, a thickness of the coating layer on the surface of the first positive electrode active material particle may be from about 5 nm to about 200 nm, for example, from about 5 nm to about 150 nm, from about 5 nm to about 100 nm, from about 5 nm to about 80 nm, from about 5 nm to about 50 nm, or from about 10 nm to about 50 nm. If the coating layer satisfies the above thickness ranges, the structural stability of the positive electrode active material may be improved without increasing resistance or reducing capacity due to the coating, and the side reaction with the electrolyte may be effectively suppressed. The thickness of the coating layer may be measured, for example, by SEM, TEM, TOF-SIMS, XPS, or EDS analysis, and for example, by EDS line profile analysis of a cross-section of the positive electrode active material.

In some embodiments, the coating layer may be thin and uniform in thickness of tens to hundreds of nanometers. A deviation in a coating layer thickness in one positive electrode active material particle may be less than or equal to about 20%, less than or equal to about 18%, or less than or equal to about 15%. The deviation in the coating layer thickness refers to the coating layer thickness within one positive electrode active material particle. The deviation of the coating layer thickness may be calculated by measuring a thickness of about 10 points in an electron microscope image of the cross-section of a single positive electrode active material particle to calculate an arithmetic average, and then dividing the absolute value of the difference between one data and the arithmetic mean value by the arithmetic mean value and multiplying by 100. The fact that the deviation or standard deviation of the coating layer thickness satisfies the above range means that a coating layer of uniform thickness is formed in a good shape on the surfaces of the positive electrode active material particles. Accordingly, structural stability of the positive electrode active material is improved, side reactions with the electrolyte are effectively suppressed, and the increase in resistance or decrease in capacity due to coating can be minimized.

### Second Positive Electrode Active Material

The second positive electrode active material includes a second lithium cobalt-based composite oxide and may include, for example, a second lithium cobalt-based oxide doped with aluminum and optionally magnesium, and the second lithium cobalt-based oxide may be represented by Chemical Formula 2.

[Chemical Formula 2] Liₐ₂Coₓ₂Mg_{y2}Al_{z2}M²_{w2}O_{2-b2}X_{b2}.

In Chemical Formula 2, 0.8≤a2≤1.5, 0.9≤x2≤0.99, 0≤y2≤0.05, 0.01≤z2≤0.04, 0≤w2≤0.01, 0.9≤x2+y2+z2+w2≤1.1, and 0≤b2≤0.1. Further, M² is one or more of B, Ba, Ca, Ce, Cr, Cu, Fe, Mn, Mo, Nb, Si, Sn, Sr, Ti, V, W, Y, Zn, and Zr, X is one or more of F, P, and S.

In further embodiments of Chemical Formula 2, 0.92≤x2≤0.98, 0.01≤y2≤0.04, 0.01≤z2≤0.03 and 0≤w2≤0.01, or 0.94≤x2≤0.98, 0.01≤y2≤0.03, 0.01≤z2≤0.02 and 0≤w2≤0.01. In addition, 0.8≤a2≤1.2, 0.9≤a2≤1.2, or 0.98≤a2≤1.1.

The second positive electrode active material including the second lithium cobalt-based oxide may be small particles. The average particle diameter D₅₀ of the second positive electrode active material may be from about 1 µm to about 9 µm, for example, from about 1 µm to about 8 µm, or about 2 µm to about 6 µm. The average particle diameter D₅₀ of the second positive electrode active material is smaller than the average particle diameter D₅₀ of the aforementioned first positive electrode active material. According to some embodiments, the positive electrode active material is a mixture of a first positive electrode active material as large particles and a second positive electrode active material as small particles, thereby improving the density of the positive electrode active material layer and realizing high capacity and high energy density. The average particle diameter D₅₀ of the second positive electrode active material may be obtained by measuring the size (diameter or length of the longest axis) of about 20 random particles in a scanning electron microscope image to obtain a particle size distribution, and taking the diameter of particles having a cumulative volume of 50 vol% in the particle size distribution as the average particle diameter.

In the second lithium cobalt-based composite oxide, an aluminum amount (i.e., doping amount) based on 100 wt% of the total metal excluding lithium may be greater than or equal to about 0.5 wt% (greater than or equal to about 5000 ppm), for example, greater than or equal to about 0.55 wt%, greater than or equal to about 0.6 wt%, greater than or equal to about 0.65 wt%, greater than or equal to about 0.7 wt%, or greater than or equal to about 0.75 wt%, and less than or equal to about 2.0 wt%, less than or equal to about 1.8 wt%, less than or equal to about 1.6 wt%, less than or equal to about 1.4 wt%, less than or equal to about 1.2 wt%, less than or equal to about 1.0 wt%, less than or equal to about 0.8 wt%, or less than or equal to about 0.75 wt%. When the doping amount of aluminum in the second lithium cobalt-based oxide satisfies the above ranges, the positive electrode active material including it is structurally stable at high voltage, and the capacity, resistance, and high-temperature cycle-life characteristics may all be improved.

The second lithium cobalt-based oxide may further include magnesium. In the second lithium cobalt-based composite oxide, a magnesium amount based on 100 wt% of the total metal excluding lithium may be less than or equal to about 2.0 wt%, for example, less than or equal to about 1.0 wt%, less than or equal to about 0.5 wt%, less than or equal to about 0.15 wt%, less than or equal to about 0.14 wt%, or less than or equal to about 0.13 wt% and may be greater than or equal to about 0.01 wt%, for example, greater than or equal to about 0.02 wt%, greater than or equal to about 0.03 wt%, greater than or equal to about 0.04 wt%, or greater than or equal to about 0.05 wt%. When the doping amount of magnesium in the second lithium cobalt-based oxide satisfies the above ranges, the positive electrode active material containing the second lithium cobalt-based oxide may be structurally stable at high voltage and may have improved capacity, resistance, and cycle-life characteristics.

In some embodiments, the doping amount of aluminum in the second lithium cobalt-based oxide may be greater than the doping amount of aluminum in the first lithium cobalt-based oxide, and the doping amount of aluminum in the second lithium cobalt-based oxide may be greater than or equal to about 0.05 wt%, for example, from about 0.05 wt% to about 0.50 wt%, from about 0.05 wt% to about 0.45 wt%, from about 0.05 wt% to about 0.40 wt%, from about 0.05 wt% to about 0.35 wt%, or from about 0.05 wt% to about 0.30 wt% more than the doping amount of aluminum in the first lithium cobalt-based oxide. The positive electrode active material including these can maintain a very stable structure even when repeated charging and discharging at high voltage, and the capacity, resistance, and room-temperature/high-temperature cycle-life characteristics of the rechargeable lithium battery may all be improved.

In some embodiments, the second positive electrode active material may be included in an amount from about 10 wt% to about 30 wt%, for example, from about 15 wt% to about 25 wt%, based on 100 wt% of the total of the first positive electrode active material and the second positive electrode active material. When the amount of the second positive electrode active material is as described above, the positive electrode active material including it may have high capacity, may improve mixture density, and may exhibit high energy density.

In some embodiments, the second positive electrode active material may include a coating layer containing aluminum, titanium, or a combination thereof disposed on the surface of the particle, and the coating layer disposed on the surface of the second positive electrode active material particle may be in the form of a shell that continuously surrounds the particle surface of the second positive electrode active material and for example, may be in the form of a shell that surrounds the entire surface of the second positive electrode active material particle. According to some embodiments, the coating layer may be formed to continuously cover the surface of the second positive electrode active material particle while being formed with a very thin and uniform thickness, whereby the positive electrode active material has improved structural stability without increasing resistance or decreasing capacity, effectively suppressing side reactions with the electrolyte, reducing gas generation under high voltage and high temperature conditions, and implementing long cycle-life characteristics for the rechargeable lithium battery.

In some embodiments, a thickness of the coating layer on the surface of the second positive electrode active material particle may be from about 5 nm to about 200 nm, for example, from about 5 nm to about 150 nm, from about 5 nm to about 100 nm, from about 5 nm to about 80 nm, from about 5 nm to about 50 nm, or from about 10 nm to about 50 nm. If the coating layer satisfies the above thickness ranges, structural stability of the positive electrode active material may be improved and side reactions with the electrolyte can be effectively suppressed without increasing resistance or decreasing capacity due to the coating. The thickness of the coating layer may be measured, for example, by SEM, TEM, TOF-SIMS, XPS, or EDS analysis, and for example, by EDS line profile analysis of a cross-section of the positive electrode active material.

In some embodiments, the coating layer may be thin and uniform in thickness, at the level of tens to hundreds of nanometers. A deviation in coating layer thickness within one positive electrode active material particle may be less than or equal to about 20%, less than or equal to about 18%, or less than or equal to about 15%. The deviation in coating layer thickness refers to the coating layer thickness within one positive electrode active material particle. The deviation of the coating layer thickness may be calculated by measuring the thickness of about 10 points in an electron microscope image of the cross-section of a single positive electrode active material particle to calculate an arithmetic average, and then dividing the absolute value of the difference between one data and the arithmetic mean value by the arithmetic mean value and multiplying by 100. The fact that the deviation or standard deviation of the coating layer thickness satisfies the above range means that a coating layer of uniform thickness is formed in a good shape on the surface of the positive electrode active material particle. Accordingly, structural stability of the positive electrode active material is improved, side reactions with the electrolyte are effectively suppressed, and the increase in resistance or decrease in capacity due to coating can be minimized.

In some embodiments, a positive electrode includes a positive electrode current collector and a positive electrode active material layer on the positive electrode current collector, wherein the positive electrode active material layer includes the aforementioned positive electrode active material. The positive electrode active material layer may further include other types of positive electrode active materials in addition to the aforementioned positive electrode active materials. Additionally, the positive electrode active material layer may optionally further include a binder, a conductive material, or a combination thereof.

In some embodiments, when measuring an X-ray diffraction (XRD) pattern of the positive electrode, a ratio of a peak intensity of a (006) plane to a peak intensity of a (101) plane may be greater than or equal to about 4.0. When measuring the X-ray diffraction (XRD) pattern of the positive electrode, the peak of the (101) plane means the peak at a diffraction angle of 2θ=37.5°±0.5° in the XRD spectrum, and the peak intensity means the vertical axis value of the peak. When measuring the X-ray diffraction (XRD) pattern of the positive electrode, the peak of the (006) plane means the peak at a diffraction angle of 2θ=38.5°+0.5° in the XRD spectrum, and the peak intensity means the vertical axis value of the peak.

The peak intensity ratio may be a value obtained after coating and drying a positive electrode composition including a first positive electrode active material and a second positive electrode active material on the current collector and after performing a first compressing process to form a positive electrode active material layer, or the peak intensity ratio may be a value obtained after additionally performing a second compressing process, etc. after the first compressing process to form a positive electrode active material layer. The peak intensity ratio (I₍₀₀₆₎/I₍₁₁₀₎) obtained may be greater than or equal to about 4.0 and may be, for example, from about 4.0 to about 6.0 or from about 4.1 to about 5.4. When the peak intensity ratio (I₍₀₀₆₎/I₍₁₁₀₎) is within the above ranges, a lithium ion movement distance is shortened, an ionic resistance is reduced, and an orientation of the positive electrode active material particles in the positive electrode changes, thereby changing crystallinity, thereby optimizing a density of the positive electrode, and thereby realizing high capacity, long cycle-life characteristics, and high energy density for the rechargeable lithium battery.

In addition, before the first compressing process, the coating layer formed by coating and drying the positive electrode composition may have a peak intensity ratio (I₍₀₀₆₎/I₍₁₁₀₎) of less than about 4.0, for example, about 0.1 to less than about 4.0. When the peak intensity ratios (I₍₀₀₆₎/I₍₁₁₀₎) before and after the compressing process are all within the above ranges, the lithium ion movement distance is shortened, and ion resistance is reduced, thereby changing an orientation of the positive electrode active material particles within the positive electrode to change crystallinity, thereby optimizing density of the positive electrode, and thereby achieving high-capacity, long cycle-life characteristics, and high energy density for the rechargeable lithium battery.

In some embodiments, the XRD measurement may be measured by using a CuKα ray as a target ray, a New Bruker D8 XRD equipment, and an area method using Fullprof. The measurement may be performed under a condition of 20 = 10° to 80°, 0.02 sec/step to 0.08 sec/step, and a step size of 0.01°/step to 0.03°/step.

The positive electrode according to some embodiments may be designed to have a peak intensity ratio, I₍₀₀₆₎/I₍₁₁₀₎, of greater than or equal to about 4.0 by adjusting the compositions of the first positive electrode active material and the second positive electrode active material. The compositions of the first positive electrode active material and the second positive electrode active material may be adjusted, for example, by adjusting each aluminum doping amount, adjusting a mixing ratio of the first and second positive electrode active materials, adjusting dispersibility of the first and second positive electrode active materials when dry-mixing the first and second positive electrode active materials , and/or adjusting a condition, a method, or a frequency of compressing the first and second positive electrode active materials during the manufacture of the positive electrode.

According to some embodiments, the positive electrode active material layer may have a loading level from about 10 mg/cm² to about 40 mg/cm², for example, from about 10 mg/cm² to about 30 mg/cm² or from about 10 mg/cm² to about 20 mg/cm². In addition, in the compressed final positive electrode, the positive electrode active material layer may have density from about 4.2 g/cc to about 4.5 g/cc, for example, from about 4.2 g/cc to about 4.4 g/cc, from about 4.2 g/cc to about 4.3 g/cc, or from about 4.23 g/cc to about 4.27 g/cc. If the positive electrode active material according to some embodiments is applied, it may be advantageous to implement such loading levels and densities of the positive electrode active material layer, and a positive electrode satisfying these loading level and positive electrode density ranges may achieve a high-capacity and high-energy-density rechargeable lithium battery. The density of the positive electrode active material layer means a ratio of a weight of the positive electrode active material layer to a volume thereof in the compressed positive electrode. The density of the positive electrode active material layer may be measured by measuring a cross-sectional area, a thickness, and the weight of the positive electrode active material layer, excluding the current collector, and multiplying the cross-sectional area and the thickness to obtain the volume, and dividing the weight by the volume.

The positive electrode active material layer according to some embodiments may further include aluminum hydroxide, aluminum oxide, or a combination thereof in addition to the first and second positive electrode active materials, for example, further Al(OH)₃. According to the method of manufacturing a positive electrode according to some embodiments, when the first and second positive electrode active materials are dry-mixed to form a mixture, Al(OH)₃ is added to the mixture and then mixed to improve dispersibility, thereby improving high-temperature characteristics of a rechargeable lithium battery. Thus, the positive electrode active material layer may further include aluminum hydroxide, aluminum oxide, or a combination thereof to improve processibility, thereby improving high-temperature characteristics of a battery such as, for example, high-temperature cycle-life characteristics.

### Binder

The binder improves binding properties of positive electrode active material particles with one another and with a current collector. Examples of the binder may include polyvinyl alcohol, carboxymethyl cellulose, hydroxypropyl cellulose, diacetyl cellulose, polyvinyl chloride, carboxylated polyvinyl chloride, polyvinyl fluoride, an ethylene oxide-containing polymer, polyvinylpyrrolidone, polyurethane, polytetrafluoroethylene, polyvinylidene fluoride, polyethylene, polypropylene, a styrene-butadiene rubber, a (meth)acrylated styrene-butadiene rubber, an epoxy resin, a (meth)acrylic resin, a polyester resin, and nylon, but the binder is not limited thereto.

### Conductive Material

The conductive material is included to provide electrode conductivity and any electrically conductive material may be used as a conductive material unless the electrically conductive material causes a chemical change. Examples of the conductive material may include a carbon-based material such as natural graphite, artificial graphite, carbon black, acetylene black, Ketjen black, a carbon fiber, a carbon nanofiber, a carbon nanotube, and the like; a metal-based material of a metal powder or a metal fiber including copper, nickel, aluminum, silver, and the like; a conductive polymer such as a polyphenylene derivative; or a mixture thereof.

Each amount of the binder and the conductive material may be from about 0.5 wt% to about 5 wt% based on 100 wt% of the positive electrode active material layer.

The current collector may include Al thin film, but the current collector is not limited thereto.

### Method of Manufacturing Positive Electrode

**In** some embodiments, a method of manufacturing a positive electrode includes: (i) preparing a first positive electrode active material including a first lithium cobalt-based oxide having an aluminum amount of greater than or equal to about 0.4 wt% based on 100 wt% of a total metal in the first lithium cobalt-based oxide, excluding lithium; (ii) preparing a second positive electrode active material including a second lithium cobalt-based oxide having an aluminum amount of greater than or equal to about 0.5 wt% based on 100 wt% of a total metal in the second lithium cobalt-based oxide, excluding lithium, and having an average particle diameter D₅₀ smaller than an average particle diameter D₅₀ of the first positive electrode active material; (iii) mixing from about 70 wt% to about 90 wt% of the first positive electrode active material, from about 10 wt% to about 30 wt% of the second positive electrode active material, and Al(OH)₃ based on a total of 100 wt% of the first positive electrode active material and the second positive electrode active material to prepare a positive electrode composition; (iv) coating and drying the positive electrode composition on a current collector to manufacture an intermediate positive electrode; and (v) subjecting the intermediate positive electrode to a first compression.

In some embodiments, a method of manufacturing a positive electrode uses a positive electrode active material including a lithium cobalt-based composite oxide and uses positive electrode active materials including lithium cobalt-based composite oxides having different average particle diameters D₅₀ The method improves dispersibility when dry-mixing different types of positive electrode active materials, and the method allows for manufacture of a high-density positive electrode through a compressing process or the like, thereby successfully improving both capacity and cycle-life characteristics of a rechargeable lithium battery.

The first positive electrode active material and the second positive electrode active material may be prepared by a method of mixing a lithium raw material with a precursor, which is a cobalt-based composite hydroxide and/or a cobalt-based composite oxide, and then subjecting the mixture to heat treatment. The heat treatment may be performed at a temperature of, for example, from about 800°C to about 1100°C, from about 850°C to about 1080°C, or from about 890°C to about 1060°C and may be performed from about 5 hours to about 25 hours, for example, from about 8 hours to about 15 hours.

The first lithium cobalt-based composite oxide may be prepared using the first cobalt-based composite oxide, and the first cobalt-based composite oxide may be represented by Chemical Formula 3. The second lithium cobalt-based composite oxide may be prepared using the second cobalt-based composite oxide, and the second cobalt-based composite oxide may be represented by Chemical Formula 4.

[Chemical Formula 3] Co_{(1-y11-z11-w11)}Mg_{y11}Al_{z11}M¹¹_{w11}O₂₋ₐ.

In Chemical Formula 3, 0≤yl 1≤0.05, 0.01≤z11≤0.04, 0≤w11≤0.01 and 0≤a≤0.5. Further, M¹¹ is one or more of B, Ba, Ca, Ce, Cr, Cu, Fe, Mn, Mo, Nb, Si, Sn, Sr, Ti, V, W, Y, Zn, and Zr.

In further embodiments of Chemical Formula 3, 0≤y11≤0.04, 0.012≤z11≤0.033 and 0≤w11≤0.01, or 0.01≤y11≤0.03, 0.012≤z11≤0.027 and 0≤w11≤0.01.

[Chemical Formula 4] Co_{(1-y12-z12-w12)}Mg_{y12}Al_{z12}M¹²_{w12}O₂₋ₐ.

In Chemical Formula 4, 0≤y12≤0.05, 0.01≤z12≤0.04, 0≤w12≤0.01 and 0≤a≤0.5. Further, M¹² is one or more of B, Ba, Ca, Ce, Cr, Cu, Fe, Mn, Mo, Nb, Si, Sn, Sr, Ti, V, W, Y, Zn, and Zr.

In further embodiments of Chemical Formula 4, 0≤y12≤0.04, 0.017≤z12≤0.033, and 0≤w12≤0.01, or 0.01≤y12≤0.03, 0.017≤z12≤0.027, and 0≤w12≤0.01.

The first cobalt-based metal composite oxide may be in a form of particles and may have an average particle diameter from about 9 µm to about 30 µm. The second cobalt-based metal composite oxide may be in a form of particles and may have an average particle diameter from about 1 µm to about 9 µm.

The lithium raw material may include lithium carbonate, lithium sulfate, lithium hydroxide, or combination thereof.

A molar ratio of lithium in the lithium raw material to 1 mole of the total metal in the precursor may be from about 0.8 to about 1.5, from about 0.8 to about 1.2, from about 0.9 to about 1.2, or from about 0.98 to about 1.1.

In some embodiments, a positive electrode composition is prepared by mixing from 70 wt% to 90 wt% of the first positive electrode active material, 10 wt% to 30 wt% of the second positive electrode active material based on a total of 100 wt% of the first positive electrode active material and the second positive electrode active material, and Al(OH)₃. By adding Al(OH)₃ during the mixing of the first positive electrode active material and the second positive electrode active material, dispersibility may be improved, thereby increasing the density of the positive electrode active material layer, thereby increasing the ratio of the peak intensity of the (006) plane to the peak intensity of the

(101) plane when measuring an X-ray diffraction (XRD) pattern of the positive electrode, and thereby improving the high-temperature characteristics of the rechargeable lithium battery.

In the step (iii) above, Al(OH)₃ may be mixed in an amount from about 0.01 wt% to about 0.1 wt% based on 100 wt% of a total of the first positive electrode active material and the second positive electrode active material. When Al(OH)₃ is added in the above amount range, the dispersibility of positive electrode active materials may be improved without reducing the capacity of the battery, thereby increasing a positive electrode density, improving processability, and improving high-temperature characteristics of the rechargeable lithium battery.

In some embodiments, when measuring an X-ray diffraction (XRD) pattern of the positive electrode, a ratio of a peak intensity of a (006) plane to a peak intensity of a (101) plane may be greater than or equal to about 4.0. When measuring the X-ray diffraction (XRD) pattern of the positive electrode, the peak of the (101) plane means the peak at a diffraction angle of 2θ=37.5°±0.5° in the XRD spectrum, and the peak intensity means the vertical axis value of the peak.

The peak intensity ratio may be obtained after coating and drying a positive electrode composition including a first positive electrode active material and a second positive electrode active material on the current collector and performing a first compressing process to form a positive electrode active material layer, or the peak intensity ratio may be obtained after additionally performing a second compressing process, etc., after the first compressing process to form a positive electrode active material layer. The peak intensity ratio (I₍₀₀₆₎/I₍₁₁₀₎) obtained may be greater than or equal to about 4.0 and may be, for example, from about 4.0 to about 6.0 or from about 4.1 to about 5.4. When the peak intensity ratio (I₍₀₀₆₎/I₍₁₁₀₎) is within the above ranges, the lithium ion movement distance is shortened, the ionic resistance is reduced, and the orientation of the positive electrode active material particles in the positive electrode changes, thereby changing crystallinity, thereby optimizing a density of the positive electrode, and thereby realizing high capacity, long cycle-life characteristics, and high energy density for the rechargeable lithium battery.

Additionally, before the first compressing process is performed, the peak intensity ratio (I₍₀₀₆₎/I₍₁₁₀₎) of the coating layer coated with the positive electrode composition may be less than about 4.0, for example, from about 0.1 to less than about 4.0. Thus, when the peak intensity ratio (I₍₀₀₆₎/I₍₁₁₀₎) before and after performing the first compressing process is within the above ranges, the lithium ion movement distance is shortened, the ionic resistance is reduced, and the orientation of the positive electrode active material particles in the positive electrode changes, thereby changing crystallinity, thereby optimizing a density of the positive electrode, and thereby realizing high capacity, long cycle-life characteristics, and high energy density for the rechargeable lithium battery.

In some embodiments, XRD measurements are performed using CuKα as a target ray, using a New Bruker D8 XRD instrument, and using the area method utilizing Fullprof. The measurement conditions may be 2θ=10° to 80°, 0.02 sec/step to 0.08 sec/step, and the step size may be 0.01°/step to 0.03°/step.

In some embodiments, a second compressing process may be further performed after the first compressing process, and, additionally, a third compressing process, a fourth compressing process, etc. may be further performed. By applying compressing in multiple stages, it is possible to increase the density of the positive electrode without causing deterioration or cracking of the positive electrode active material, and to increase the peak intensity ratio of I₍₀₀₆₎/I₍₁₁₀₎ according to some embodiments.

The first compressing may be pressurized so that the density of the positive electrode active material layer satisfies a range of about 4.0 g/cc to about 4.2 g/cc, and the second compressing may be pressurized so that the density of the positive electrode active material layer satisfies a range of greater than or equal to about 4.2 g/cc, for example, about 4.25 g/cc to about 4.5 g/cc.

In the final compressed positive electrode, the density of the positive electrode active material layer may be from about 4.2 g/cc to about 4.5 g/cc, for example, from about 4.2 g/cc to about 4.4 g/cc, from about 4.2 g/cc to about 4.3 g/cc, or from about 4.23 g/cc to about 4.27 g/cc.

### Rechargeable Lithium Battery

Some embodiments provide a rechargeable lithium battery including the aforementioned positive electrode, negative electrode, and electrolyte. The rechargeable lithium battery may include a positive electrode, a negative electrode, a separator between the positive electrode and the negative electrode, and an electrolyte solution.

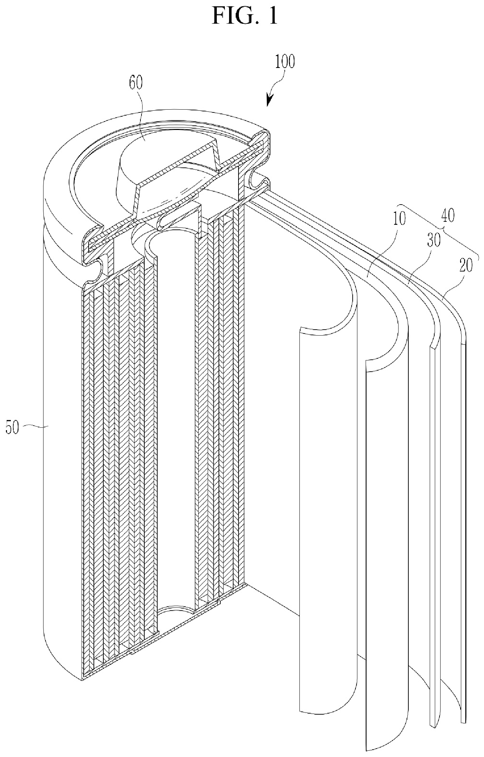

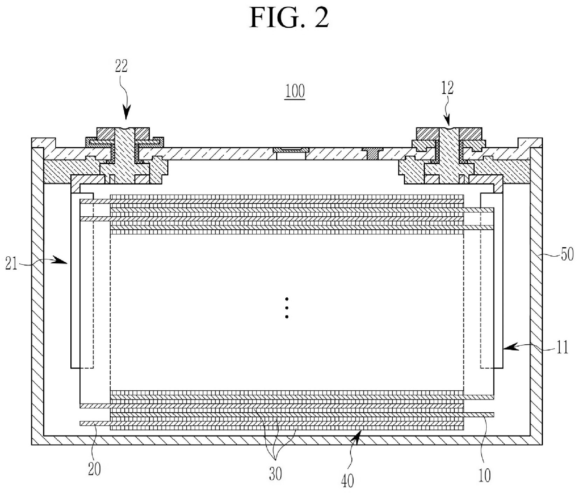

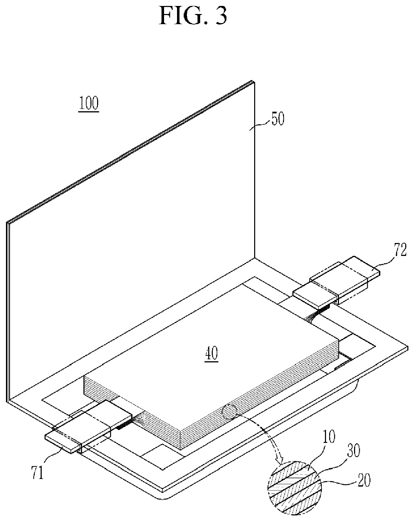

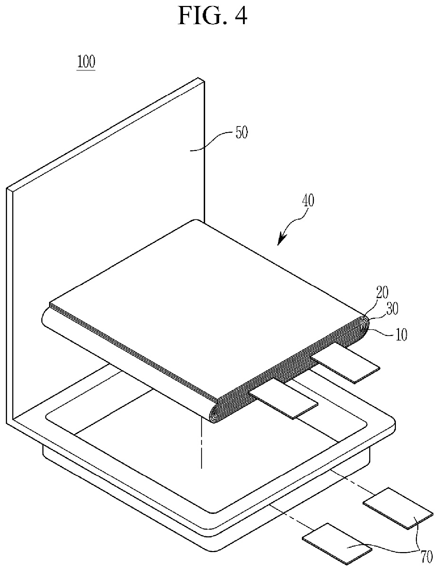

The rechargeable lithium battery may be cylindrical, prismatic, pouch, coin, etc. depending on its shape. FIGS. 1 to 4 are schematic views showing rechargeable lithium batteries according to some embodiments of the present disclosure, where FIG. 1 shows a cylindrical battery, FIG. 2 shows a prismatic battery, and FIGS. 3 and 4 each show a pouch-shaped battery. The rechargeable lithium battery 100 includes an electrode assembly 40 with a separator 30 interposed between the positive electrode 10 and the negative electrode 20, and a case 50 in which the electrode assembly 40 is housed. The positive electrode 10, the negative electrode 20, and the separator 30 may be impregnated with an electrolyte solution (not shown). The rechargeable lithium battery 100 may include a sealing member 60 that seals the case 50 as shown in FIG. 1. Additionally, in FIG. 2, the rechargeable lithium battery 100 may include a positive electrode lead tab 11, a positive electrode terminal 12, a negative electrode lead tab 21, and a negative electrode terminal 22. As shown in FIGS. 3 and 4, the rechargeable lithium battery 100 includes an electrode tab 70, that is, a positive electrode tab 71 and a negative electrode tab 72, each serving as an electrical path for inducing the current formed in the electrode assembly 40 to the outside.

### Negative Electrode

The negative electrode may include a current collector and a negative electrode active material layer on the current collector, and the negative electrode active material layer may include a negative electrode active material and may further include a binder, a conductive material, or a combination thereof.

### Negative Electrode Active Material

The negative electrode active material may include a material that reversibly intercalates/deintercalates lithium ions, a lithium metal, a lithium metal alloy, a material capable of doping/dedoping lithium, or transition metal oxide.

The material that reversibly intercalates/deintercalates lithium ions may include, for example crystalline carbon, amorphous carbon, or a combination thereof as a carbon-based negative electrode active material. The crystalline carbon may be irregular, or sheet, flake, spherical, or fiber shaped natural graphite or artificial graphite. The amorphous carbon may be a soft carbon, a hard carbon, a mesophase pitch carbonization product, calcined coke, and the like.

The lithium metal alloy includes an alloy of lithium and a metal selected from Na, K, Rb, Cs, Fr, Be, Mg, Ca, Sr, Si, Sb, Pb, In, Zn, Ba, Ra, Ge, Al, and Sn.

The material capable of doping/dedoping lithium may be a Si-based negative electrode active material or a Sn-based negative electrode active material. The Si-based negative electrode active material may include silicon, a silicon-carbon composite, SiOₓ (0<x≤2), a Si-Q alloy (wherein Q is an element selected from an alkali metal, an alkaline-earth metal, a Group 13 element, a Group 14 element [excluding Si], a Group 15 element, a Group 16 element, a transition metal, a rare earth element, and a combination thereof, for example, Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Tl, Ge, P, As, Sb, Bi, S, Se, Te, Po, and a combination thereof), or a combination thereof. The Sn-based negative electrode active material may be Sn, SnO₂, a Sn alloy, or a combination thereof.

The silicon-carbon composite may be a composite of silicon and amorphous carbon. An average particle diameter D₅₀ of the silicon-carbon composite particles may be, for example, from about 0.5 µm to about 20 µm. According to some embodiments, the silicon-carbon composite may be in a form of silicon particles and amorphous carbon coated on a surface of the silicon particles. The silicon-carbon composite may include a secondary particle (core) in which silicon primary particles are assembled and an amorphous carbon coating layer (shell) on a surface of the secondary particle. The amorphous carbon may also be present between the silicon primary particles; for example, the silicon primary particles may be coated with amorphous carbon. The secondary particles may be dispersed in an amorphous carbon matrix.

The silicon-carbon composite may further include crystalline carbon. The silicon-carbon composite may include a core including crystalline carbon and silicon particles and an amorphous carbon coating layer on the surface of the core. The crystalline carbon may be artificial graphite, natural graphite, or a combination thereof. The amorphous carbon may include soft carbon or hard carbon, a mesophase pitch carbonized product, and calcined coke.

When the silicon-carbon composite includes silicon and amorphous carbon, an amount of silicon may be from about 10 wt% to about 50 wt% and an amount of amorphous carbon may be from about 50 wt% to about 90 wt% based on 100 wt% of the silicon-carbon composite. In addition, when the composite includes silicon, amorphous carbon, and crystalline carbon, an amount of silicon may be from about 10 wt% to about 50 wt%, an amount of crystalline carbon may be from about 10 wt% to about 70 wt%, and an amount of amorphous carbon may be from about 20 wt% to about 40 wt% based on 100 wt% of the silicon-carbon composite.

Additionally, a thickness of the amorphous carbon coating layer may be from about 5 nm to about 100 nm. An average particle diameter D₅₀ of the silicon particles (primary particles) may be from about 10 nm to about 1 µm or from about 10 nm to about 200 nm. The silicon particles may exist as silicon alone, in the form of a silicon alloy, or in an oxidized form. The oxidized form of silicon may be represented by SiOₓ (0<x≤2). The atomic ratio of Si:O, which indicates a degree of oxidation, may be from about 99:1 to about 33:67. As used herein, when a definition is not otherwise provided, an average particle diameter D₅₀ indicates a diameter of particle where a cumulative volume is about 50 volume% in a particle size distribution.

The Si-based negative electrode active material or Sn-based negative electrode active material may be mixed with the carbon-based negative electrode active material. When the Si-based negative electrode active material or Sn-based negative electrode active material and the carbon-based negative electrode active material are mixed and used, a mixing ratio may be a weight ratio from about 1:99 to about 90:10.

### Binder

The binder serves to adhere the negative electrode active material particles to each other and also to adhere the negative electrode active material to the current collector. The binder may be a non-aqueous binder, an aqueous binder, a dry binder, or a combination thereof.

The non-aqueous binder may include polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, polyamideimide, polyimide, or a combination thereof.

The aqueous binder may include a styrene-butadiene rubber, a (meth)acrylated styrene-butadiene rubber, a (meth)acrylonitrile-butadiene rubber, a (meth)acrylic rubber, a butyl rubber, a fluorine rubber, polyethylene oxide, polyvinylpyrrolidone, polyepichlorohydrin, polyphosphazene, poly(meth)acrylonitrile, an ethylene propylene diene copolymer, polyvinylpyridine, chlorosulfonated polyethylene, latex, a polyester resin, a (meth)acrylic resin, a phenol resin, an epoxy resin, polyvinyl alcohol, or a combination thereof.

When an aqueous binder is used as the negative electrode binder, a cellulose-based compound capable of imparting viscosity may be further included. As the cellulose-based compound, one or more of carboxymethyl cellulose, hydroxypropylmethyl cellulose, methyl cellulose, or alkali metal salts thereof may be mixed and used. The alkali metal may be Na, K, or Li.

The dry binder may be a polymer material capable of becoming a fiber and may be, for example, polytetrafluoroethylene, polyvinylidene fluoride, a polyvinylidene fluoride-hexafluoropropylene copolymer, polyethylene oxide, or a combination thereof.

### Conductive Material

The conductive material is included to provide electrode conductivity and any electrically conductive material may be used unless it causes a chemical change. Examples of the conductive material include a carbon-based material such as natural graphite, artificial graphite, carbon black, acetylene black, ketjen black, a carbon fiber, a carbon nanofiber, a carbon nanotube, and the like; a metal-based material of a metal powder or a metal fiber including copper, nickel, aluminum, silver, and the like; a conductive polymer such as a polyphenylene derivative; or a mixture thereof.

An amount of the negative electrode active material may be from about 95 wt% to about 99.5 wt% based on 100 wt% of the negative electrode active material layer, and an amount of the binder may be from about 0.5 wt% to about 5 wt% based on 100 wt% of the negative electrode active material layer. The negative electrode active material layer may include from about 90 wt% to about 99 wt% of the negative electrode active material, from about 0.5 wt% to about 5 wt% of the binder, and from about 0.5 wt% to about 5 wt% of the conductive material.

### Current Collector

The negative electrode current collector may include, for example, indium (In), copper (Cu), magnesium (Mg), stainless steel, titanium (Ti), iron (Fe), cobalt (Co), nickel (Ni), zinc (Zn), aluminum (Al), germanium (Ge), lithium (Li), or an alloy thereof and may be in the form of a foil, sheet, or foam. A thickness of the negative electrode current collector may be, for example, from about 1 µm to about 20 µm, from about 5 µm to about 15 µm, or from about 7 µm to about 10 µm.

### Electrolyte

The electrolyte for a rechargeable lithium battery may be an electrolyte solution, which may include a non-aqueous organic solvent and a lithium salt.

The non-aqueous organic solvent serves as a medium for transmitting ions taking part in the electrochemical reaction of a battery. The non-aqueous organic solvent may be a carbonate-based, ester-based, ether-based, ketone-based, or alcohol-based solvent, an aprotic solvent, or a combination thereof.

The carbonate-based solvent may include dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and the like. The ester-based solvent may include methyl acetate, ethyl acetate, n-propyl acetate, t-butyl acetate, methyl propionate, ethyl propionate, decanolide, mevalonolactone, valerolactone, caprolactone, and the like. The ether-based solvent may include dibutyl ether, tetraglyme, diglyme, dimethoxyethane, 2-methyltetrahydrofuran, 2,5-dimethyltetrahydrofuran, tetrahydrofuran, and the like. In addition, the ketone-based solvent may include cyclohexanone, and the like. The alcohol-based solvent may include ethanol, isopropyl alcohol, and the like and the aprotic solvent may include nitriles such as R-CN (wherein R is a C2 to C20 linear, branched, or cyclic hydrocarbon group, and may include a double bond, an aromatic ring, or an ether bond, and the like); amides such as dimethylformamide; dioxolanes such as 1,3-dioxolane, 1,4-dioxolane, and the like; sulfolanes, and the like.

The non-aqueous organic solvent may be used alone or in a mixture of two or more types, and when two or more types are used in a mixture, a mixing ratio can be appropriately adjusted according to a desired battery performance.

When using a carbonate-based solvent, a cyclic carbonate and a chain carbonate may be mixed and used, and the cyclic carbonate and the chain carbonate may be mixed in a volume ratio from about 1:1 to about 1:9.

The non-aqueous organic solvent may further include an aromatic hydrocarbon-based organic solvent. A carbonate-based solvent and an aromatic hydrocarbon-based organic solvent may be mixed and used in a volume ratio from about 1:1 to about 30:1.

The electrolyte solution may further include vinylethylene carbonate, vinylene carbonate, or an ethylene carbonate-based compound to improve battery cycle-life.

Examples of the ethylene carbonate-based compound include fluoroethylene carbonate, difluoroethylene carbonate, chloroethylene carbonate, dichloroethylene carbonate, bromoethylene carbonate, dibromoethylene carbonate, nitroethylene carbonate, cyanoethylene carbonate, and the like.

The lithium salt dissolved in the organic solvent supplies lithium ions in a battery, enables a basic operation of a rechargeable lithium battery, and improves transportation of the lithium ions between positive and negative electrodes. Examples of the lithium salt may include at least one selected from LiPF₆, LiBF₄, LiSbF₆, LiAsF₆, LiClO₄, LiAlO₂, LiAlCl₄, LiPO₂F₂, LiCl, LiI, LiN(SO₂C₂F₅)₂, Li(FSO₂)₂N (lithium bis(fluorosulfonyl)imide; LiFSI), LiC₄F₉SO₃, LiN(CₓF₂ₓ₊₁SO₂)(C_{y}F_{2y+1}SO₂) (wherein x and y are integers of 1 to 20), lithium trifluoromethane sulfonate, lithium tetrafluoroethanesulfonate, lithium difluorobis(oxalato)phosphate (LiDFBOP), and lithium bis(oxalato) borate (LiBOB).

A concentration of lithium salt may be within the range of about 0.1 M to about 2.0 M. If the concentration of lithium salt is within this range, the electrolyte solution has appropriate ionic conductivity and viscosity. Thus, excellent performance can be achieved, and lithium ions can move effectively.

### Separator

Depending on the type of the rechargeable lithium battery, a separator may be present between the positive electrode and the negative electrode. The separator may include polyethylene, polypropylene, polyvinylidene fluoride, or a multilayer film of two or more layers thereof, and a mixed multilayer film such as a polyethylene/polypropylene two-layer separator, polyethylene/polypropylene/polyethylene three-layer separator, polypropylene/polyethylene/polypropylene three-layer separator, and the like.

The separator may include a porous substrate and a coating layer including an organic material, an inorganic material, or a combination thereof on one or both surfaces of the porous substrate.

The porous substrate may be a polymer film formed of any one polymer selected from polyolefin such as polyethylene and polypropylene, polyester such as polyethylene terephthalate and polybutylene terephthalate, polyacetal, polyamide, polyimide, polycarbonate, polyether ketone, polyarylether ketone, polyetherimide, polyamideimide, polybenzimidazole, polyethersulfone, polyphenylene oxide, a cyclic olefin copolymer, polyphenylene sulfide, polyethylene naphthalate, TEFLON, and polytetrafluoroethylene, or a copolymer or mixture of two or more thereof. The porous substrate may include glass fibers, or may comprise a composite membrane of polymer and glass fibers.

The porous substrate may have a thickness from about 1 µm to about 40 µm, for example, from about 1 µm to about 30 µm, from about 1 µm to about 20 µm, from about 5 µm to about 15 µm, or from about 10 µm to about 15 µm.

The organic material may include a (meth)acrylic copolymer including a first structural unit derived from (meth)acrylamide, and a second structural unit including at least one of a structural unit derived from (meth)acrylic acid or (meth)acrylate, and a structural unit derived from (meth)acrylamidosulfonic acid or a salt thereof.

The inorganic material may include inorganic particles selected from Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and a combination thereof, but the inorganic material is not limited thereto. An average particle diameter D₅₀ of the inorganic particles may be from about 1 nm to about 2000 nm, for example, from about 100 nm to about 1000 nm or from about 100 nm to about 700 nm.

The organic material and the inorganic material may be mixed in one coating layer, or a coating layer including an organic material and a coating layer including an inorganic material may be stacked.

The thickness of the coating layer may be from about 0.5 µm to about 20 µm, for example, from about 1 µm to about 10 µm or from about 1 µm to about 5 µm.

Examples and comparative examples of the present disclosure are described below. However, the present disclosure is not limited to the following embodiments of the examples and comparative examples.

### Example 1

### 1. Preparation of Positive Electrode Active Material

A first cobalt transition metal composite oxide (Co_{0.99}Al_{0.01}O₂) having an aluminum amount of 4800 ppm (0.48 wt%) based on 100 wt% of total metals and Li₂CO₃ were mixed to have a molar ratio of 1:1.04 between the total metals of the first cobalt transition metal composite oxide and lithium of the Li₂CO₃ and then were heat-treated at about 1050°C for 10 hours under an air atmosphere, preparing a first positive electrode active material containing the first lithium cobalt-based oxide (Li_{1.04}Co_{0.99}Al_{0.01}O₂) having an average particle diameter D₅₀ of 18 µm.

A second cobalt transition metal composite oxide (Co_{0.987}Al_{0.013}O₂) having an aluminum amount of 6000 ppm (0.6 wt%) based on 100 wt% of total metals and Li₂CO₃ were mixed to have a molar ratio of 1:1.02 between the total metals of the second cobalt transition metal composite oxide and lithium of the Li₂CO₃ and then were heat-treated at about 900°C for 10 hours under an air atmosphere, preparing a second positive electrode active material containing the second lithium cobalt-based oxide (Li_{1.02}Co_{0.987}Al_{0.013}O₂) having an average particle diameter D₅₀ of about 4 µm.

80 wt% of the first positive electrode active material, 20 wt% of the second positive electrode active material, and Al(OH)₃ were dry-mixed, creating a mixture and preparing a positive electrode active material. 0.01 wt% of Al(OH)₃ was added to the mixture based on 100 wt% of a total weight of the first positive electrode active material and the second positive electrode active material.

### 2. Manufacturing of Rechargeable Lithium Battery Cell

98.5 wt% of the positive electrode active material, 1.0 wt% of a polyvinylidene fluoride binder, and 0.5 wt% of a carbon nanotube conductive material were mixed in an N-methyl-2-pyrrolidone (NMP) solvent to prepare positive electrode active material layer slurry, and the slurry was coated on an aluminum foil current collector and then dried and compressed at 45°C for a contact time of about 1 second to manufacture a positive electrode including a positive electrode active material layer having a density of 4.2 g/cc.

97.5 wt% of a graphite negative electrode active material, 1.5 wt% of carboxymethyl cellulose, and 1 wt% of a styrene butadiene rubber was mixed in a water solvent to prepare a negative electrode active material layer slurry. The negative electrode active material layer slurry was coated on a copper foil current collector, dried, and compressed to manufacture a negative electrode.

A rechargeable lithium battery cell was manufactured by a conventional method using an electrolyte solution in which 1M LiPF₆ was dissolved in a solvent in which ethylene carbonate and dimethyl carbonate were mixed at a volume ratio of 3:7, with a polytetrafluoroethylene separator interposed between the positive and negative electrodes.

### Example 2

A positive electrode active material and a rechargeable lithium battery cell were manufactured substantially in the same manner as in Example 1, except that a first cobalt transition metal composite oxide having an aluminum amount of 5800 ppm (0.58 wt%) was used to prepare a first positive electrode active material containing the first lithium cobalt-based oxide (Li_{1.04}Co_{0.9874}Al_{0.0126}O₂), and a second cobalt transition metal composite oxide having an aluminum amount of 7000 ppm (0.70 wt%) was used to prepare a second positive electrode active material containing the second lithium cobalt-based oxide (Li_{1.02}Co_{0.985}Al_{0.015}O₂) in preparing the positive electrode active material.

### Example 3

A positive electrode active material and a rechargeable lithium battery cell were manufactured substantially in the same manner as in Example 1, except that a first cobalt transition metal composite oxide having an aluminum amount of 7300 ppm (0.73 wt%) was used to prepare a first positive electrode active material containing the first lithium cobalt-based oxide (Li_{1.04}Co_{0.982}Al_{0.016}O₂), and a second cobalt transition metal composite oxide having an aluminum amount of 8300 ppm (0.83 wt%) was used to prepare a second positive electrode active material containing the second lithium cobalt-based oxide (Li_{1.02}Co_{0.982}Al_{0.018}O₂) in preparing the positive electrode active material.

### Example 4

A positive electrode active material and a rechargeable lithium battery cell were manufactured substantially in the same manner as in Example 1, except that the first compressed positive electrode was additionally secondarily compressed so that the positive electrode active material layer had density of 4.25 g/cc in manufacturing the rechargeable lithium battery cell.

### Comparative Example 1

A positive electrode active material and a rechargeable lithium battery cell were manufactured substantially in the same manner as in Example 1, except that CoO₂ was used as the first cobalt oxide and as the second cobalt oxide in preparing the positive electrode active material.

### Comparative Example 2

A positive electrode active material and a rechargeable lithium battery cell were manufactured substantially in the same manner as in Example 1, except that a first cobalt transition metal composite oxide having an aluminum amount of 2500 ppm (0.25 wt%) was used to prepare a first positive electrode active material containing the first lithium cobalt-based oxide (Li_{1.04}Co_{0.995}Al_{0.005}O₂), and a second cobalt transition metal composite oxide having an aluminum amount of 2500 ppm (0.25 wt%) was used to prepare a second positive electrode active material containing the second lithium cobalt-based oxide (Li_{1.02}Co_{0.995}Al_{0.005}O₂) in preparing the positive electrode active material.

### Comparative Example 3

A positive electrode active material and a rechargeable lithium battery cell were manufactured substantially in the same manner as in Example 1, except that a first cobalt transition metal composite oxide having an aluminum amount of 4000 ppm (0.4 wt%) was used to prepare a first positive electrode active material containing the first lithium cobalt-based oxide (Li_{1.04}Co_{0.991}Al_{0.009}O₂), and a second cobalt transition metal composite oxide having an aluminum amount of 4000 ppm (0.4 wt%) was used to prepare a second positive electrode active material containing the second lithium cobalt-based oxide (Li_{1.02}Co_{0.991}Al_{0.009}O₂) in preparing the positive electrode active material.

### Comparative Example 4

A positive electrode active material and a rechargeable lithium battery cell were manufactured substantially in the same manner as in Example 1, except that a first cobalt transition metal composite oxide having an aluminum amount of 6000 ppm (0.6 wt%) was used to prepare a first positive electrode active material containing the first lithium cobalt-based oxide (Li_{1.04}Co_{0.987}Al_{0.013}O₂), and a second cobalt transition metal composite oxide having an aluminum amount of 6000 ppm (0.6 wt%) was used to prepare a second positive electrode active material containing the second lithium cobalt-based oxide (Li_{1.02}Co_{0.987}Al_{0.013}O₂),but Al(OH)₃ was not mixed, when the first and second positive electrode active materials were dry-mixed, in preparing the positive electrode active material.

### Evaluation 1: Ratio of Peak Intensity of (006) Plane to Peak Intensity of (101) Plane

The positive electrodes according to the examples and the comparative examples were subjected to X-ray diffraction analysis by using Powder XRD (D8 Advance) made by Bruker AXS SE under the following conditions to measure a ratio of a peak intensity of a (006) plane to a peak intensity of a (101) plane (I₀₀₆/I₁₀₁), and the results are shown in Table 1 below.
- X-ray wavelength: 1.5406 Å (CuKα)
- Slit condition: Divergence Slit 0.5°, Scattering Slit 0.5°, Receiving Slit 0.20 mm
- Scan condition: Continuous Scan, 10°≤2θ≤80°, 0.01°/step, 1.27°/min, total measurement time 55 min.

### Evaluation 2: Initial Charge/discharge Capacity and Efficiency

The rechargeable lithium battery cells according to the examples and the comparative examples were charged to an upper limit voltage of 4.55 V at a constant current of 0.2 C and to 0.05 C at a constant voltage at 25°C and then discharged to a cutoff voltage of 3.0 V at 0.2 C for initial charge and discharge. Table 1 shows an initial charge capacity, an initial discharge capacity, and a ratio of the initial discharge capacity to the initial charge capacity as efficiency.

### Evaluation 3: High-temperature Cycle-life Characteristics

After the initial charge and discharge of Evaluation 2, the cells were 50 cycles or more repeatedly charged and discharged within a voltage range of 3.0 V to 4.55 V at 0.2 C at 45°C to calculate a ratio of 50^{th} cycle discharge capacity to the initial discharge capacity, and the results are shown in Table 1.

**Table 1:**

| | First positive electrode active material aluminum amount (wt%) | Second positive electrode active material aluminum amount (wt%) | Positive electrode active material layer density (g/cc) | I₀₀₆/I₁₀₁ | 0.2 C charge (mAh/g) | 0.2 C discharge (mAh/g) | Efficiency (%) | Cycle-life (%, 45°C, 50 cyc) |
|---|---|---|---|---|---|---|---|---|
| Example 1 | 0.48 | 0.6 | 4.2 | 4.1 | 208.1 | 195.2 | 93.8 | 85.9 |
| Example 2 | 0.58 | 0.7 | 4.2 | 4.8 | 207.6 | 193.5 | 93.2 | 87.4 |
| Example 3 | 0.73 | 0.83 | 4.2 | 5.1 | 206.7 | 191.8 | 92.8 | 89.7 |
| Example 4 | 0.48 | 0.6 | 4.25 | 5.4 | 208.0 | 196.6 | 94.5 | 90.8 |
| Comparative Example 1 | - | - | 4.2 | 2.8 | 211.2 | 204.2 | 96.7 | 50.1 |
| Comparative Example 2 | 0.25 | 0.25 | 4.2 | 3.2 | 209.5 | 200.7 | 95.8 | 72.1 |
| Comparative Example 3 | 0.4 | 0.4 | 4.2 | 3.8 | 208.7 | 196.4 | 94.1 | 75.4 |
| Comparative Example 4 | 0.6 | 0.6 | 4.2 | 3.3 | 207.9 | 193.7 | 93.2 | 82.3 |

Referring to Table 1, Examples 1 to 4 (in which a first positive electrode active material had an aluminum amount of greater than or equal to about 0.4 wt% based on 100 wt% of a total metal excluding lithium in the first positive electrode active material and a second positive electrode active material had an aluminum amount of greater than or equal to about 0.5 wt% based on 100 wt% of a total metal excluding lithium in the second positive electrode active material, and also in which Al(OH)₃ was used when the first and second positive electrode active materials were mixed) confirmed that the ratio of the peak intensity of a (006) plane to a peak intensity of a (101) plane, I₀₀₆/I₁₀₁, was greater than or equal to 4.1. Conversely, Comparative Examples 1 to 3 (in which a first positive electrode active material had an aluminum amount of less than 0.4 wt% based on 100 wt% of a total metal excluding lithium in the first positive electrode active material and a second positive electrode active material an aluminum amount of less than 0.5 wt% based on 100 wt% of a total metal excluding lithium in the second positive electrode active material) confirmed that the ratio of the peak intensity of a (006) plane to a (101) plane, I₀₀₆/I₁₀₁, was less than or equal to 3.8. In addition, Comparative Example 4 (in which the first positive electrode active material and the second positive electrode active material were mixed without using Al(OH)₃) exhibited a value for I₀₀₆/I₁₀₁ of 3.3. Compared to Comparative Examples 1 to 4, Examples 1 to 4 exhibited significantly improved high-temperature cycle-life characteristics for a rechargeable lithium battery, while maintaining initial discharge capacity and initial charge/discharge efficiency of the rechargeable lithium battery within excellent ranges.

In particular, Example 4 (which had 0.48 wt% of an aluminum amount based on 100 wt% of a total metal excluding lithium in the first positive electrode active material and had 0.6 wt% of an aluminum amount based on 100 wt% of a total metal excluding lithium in the second positive electrode active material and which also achieved a positive electrode active material layer density of 4.25 g/cc through two compressions) was confirmed to exhibit the most excellent initial charge/discharge efficiency and high-temperature cycle-life characteristics for a rechargeable lithium battery.

While some embodiments have been described above, the present disclosure is not limited to the above-described embodiments. Rather, the present disclosure is also intended to cover various modifications and equivalent arrangements to the above-described embodiments.

### <Description of Symbols>

| | | | |
|---|---|---|---|
| 100: | rechargeable lithium battery | 10: | positive electrode |
| 11: | positive electrode lead tab | 12: | positive electrode terminal |
| 20: | negative electrode | 21: | negative electrode lead tab |
| 22: | negative electrode terminal | 30: | separator |
| 40: | electrode assembly | 50: | case |
| 60: | sealer | 70: | electrode tab |
| 71: | positive electrode tab | 72: | negative electrode tab |

## Claims

1. A positive electrode comprising:
a current collector; and
a positive electrode active material layer on the current collector, the positive electrode active material layer comprising a positive electrode active material comprising:
a first positive electrode active material comprising a first lithium cobalt-based composite oxide having an aluminum amount greater than or equal to 0.4 wt% based on 100 wt% of a total metal in the first lithium cobalt-based composite oxide excluding lithium; and
a second positive electrode active material comprising a second lithium cobalt-based composite oxide having an aluminum amount of greater than or equal to 0.5 wt% based on 100 wt% of a total metal in the second lithium cobalt-based composite oxide, excluding lithium,
wherein an average particle diameter D₅₀ of the first positive electrode active material is larger than an average particle diameter D₅₀ of the second positive electrode active material,
wherein, based on a total of 100 wt% of the first positive electrode active material and the second positive electrode active material, the positive electrode active material comprises the first positive electrode active material in an amount from 70 wt% to 90 wt% and the second positive electrode active material in an amount from 10 wt% to 30 wt%, and
wherein, when measuring the X-ray diffraction pattern of the positive electrode, a ratio of a peak intensity of a (006) plane of the positive electrode to a peak intensity of a (101) plane of the positive electrode, is greater than or equal to 4.0.

2. The positive electrode as claimed in claim 1, wherein the first lithium cobalt-based composite oxide is represented by:
Liₐ₁Coₓ₁Mg_{y1}Al_{z1}M¹_{w1}O_{2-b1}X_{b1}
wherein 0.8≤a1≤1.5, 0.9≤x1≤0.99, 0≤y1≤0.05, 0.01≤z1≤0.04, 0≤w1≤0.01, 0.9≤x1+y1+z1+w1≤1.1, and 0≤b1≤0.1,
wherein M¹ is one or more of B, Ba, Ca, Ce, Cr, Cu, Fe, Mn, Mo, Nb, Si, Sn, Sr, Ti, V, W, Y, Zn, and Zr, and
wherein X is one or more of F, P, and S.

3. The positive electrode as claimed in claim 1 or claim 2, wherein an aluminum amount in the first lithium cobalt-based composite oxide is from 0.4 wt% to 2.0 wt% based on 100 wt% of a total metal in the first lithium cobalt-based composite oxide excluding lithium.

4. The positive electrode as claimed in any one of claims 1 to 3, wherein an average particle diameter D₅₀ of the first positive electrode active material is from 9 µm to 30 µm.

5. The positive electrode as claimed in any one of claims 1 to 4, wherein the second lithium cobalt-based composite oxide is represented by:
Liₐ₂Coₓ₂Mg_{y2}Al_{z2}M²_{w2}O_{2-b2}X_{b2}
wherein 0.8≤a2≤1.5, 0.9≤x2≤0.99, 0≤y2≤0.05, 0.01≤z2≤0.04, 0≤w2≤0.01, 0.9≤x2+y2+z2+w2≤1.1 and 0≤b2≤0.1,
wherein M² is one or more of B, Ba, Ca, Ce, Cr, Cu, Fe, Mn, Mo, Nb, Si, Sn, Sr, Ti, V, W, Y, Zn, and Zr, and
wherein X is one or more of F, P, and S.

6. The positive electrode as claimed in any one of claims 1 to 5, wherein an aluminum amount in the second lithium cobalt-based composite oxide is 0.5 wt% to 2.0 wt% based on 100 wt% of a total metal in the second lithium cobalt-based composite oxide, excluding lithium.

7. The positive electrode as claimed in any one of claims 1 to 6, wherein an average particle diameter D₅₀ of the second positive electrode active material is 1 µm to 9 µm.

8. The positive electrode as claimed in any one of claims 1 to 7, wherein the ratio of the peak intensity of the (006) plane to the peak intensity of the (101) plane is 4.0 to 6.0 when measuring the X-ray diffraction pattern of the positive electrode.

9. The positive electrode as claimed in any one of claims 1 to 8, wherein
(a) a loading level of the positive electrode active material layer is 10 mg/cm² to 40 mg/cm²,
and/or
(b) a density of the positive electrode active material layer is 4.2 g/cc to 4.5 g/cc.

10. The positive electrode as claimed in any one of claims 1 to 9, wherein the positive electrode active material layer further comprises aluminum hydroxide, aluminum oxide, or a combination thereof.

11. A method of manufacturing a positive electrode, the method comprising:
(i) preparing a first positive electrode active material comprising a first lithium cobalt-based oxide having an aluminum amount greater than or equal to 0.4 wt% based on 100 wt% of a total metal in the first lithium cobalt-based oxide excluding lithium;
(ii) preparing a second positive electrode active material comprising a second lithium cobalt-based oxide having an aluminum amount of greater than or equal to 0.5 wt% based on 100 wt% of a total metal in the second lithium cobalt-based oxide excluding lithium, and having an average particle diameter D₅₀ that is smaller than an average particle diameter D₅₀ of the first positive electrode active material;
(iii) mixing from 70 wt% to 90 wt% of the first positive electrode active material, from 10 wt% to 30 wt% of the second positive electrode active material based on a total of 100 wt% of the first positive electrode active material and the second positive electrode active material, and Al(OH)₃ to prepare a positive electrode composition;
(iv) coating and drying the positive electrode composition on a current collector to manufacture the intermediate positive electrode; and
(v) subjecting the intermediate positive electrode to a compression.

12. The method as claimed in claim 11, further comprising subjecting the positive electrode to another compression after the compression of step (v).

13. The method as claimed in claim 11 or claim 12, wherein during step (iii), Al(OH)₃ is mixed in an amount from 0.01 wt% to 0.1 wt% based on a total of 100 wt% of the first positive electrode active material and the second positive electrode active material.

14. The method as claimed in any one of claims 11 to 13, wherein
(a) a ratio of a peak intensity of a (006) plane to a peak intensity of a (101) plane 4.0 to 6.0 when measuring an X-ray diffraction pattern of the compressed positive electrode, and/or
(b) in the compressed positive electrode, a density of the positive electrode active material layer is 4.2 g/cc to 4.5 g/cc.

15. A rechargeable lithium battery comprising:
the positive electrode as claimed in any one of claims 1 to 10;
a negative electrode; and
an electrolyte.
